# EUROPEAN PATENT SPECIFICATION

(11) **EP 3 001 705 B1**
(45) Date of publication and mention of the grant of the patent: **16.05.2018**
(21) Application number: 14290284.0
(22) Date of filing: 23.09.2014
(51) Int. Cl.: H04W 4/02, H04L 12/14, H04M 15/00

(54) **PROVIDING SPONSORED CONTENT BASED ON LOCATION AND CONTEXT**
BEREITSTELLEN VON GESPONSORTEN INHALTEN BASIEREND AUF ORT UND KONTEXT
OFFRIR UN CONTENU SPONSORISÉ EN FONCTION DE L'EMPLACEMENT ET DU CONTEXTE

(43) Date of publication of application: 30.03.2016
(73) Proprietor: Alcatel Lucent, 91620 Nozay (FR)
(72) Inventor: Mathur, Akhil, Dublin 15 (IE)
(74) Representative: Berthier, Karine

(56) References cited:
- US-A1- 2012 036 051
- US-B1- 6 456 234

## Description

### FIELD OF THE INVENTION

The present invention relates to sponsoring of content for wireless telecommunications.

### BACKGROUND

The last few years have witnessed a tremendous upsurge in the demand of multimedia content (audio, video etc.) on mobile devices, fuelled by Over-the-top (OTT) services like Netflix, ESPN live streaming, Spotify, etc. To support this increasing demand, mobile network operators have continuously invested in their infrastructure, however, for various socio-economic reasons, the operators have not proportionately increased the price of end-user data plans to recover this investment.

In view of the foregoing, it would be desirable to increase the content consumed by users over mobile networks while sustaining the investment of the operators so that they continue to improve the mobile network. In particular, it would be desirable to monetize the increasing data traffic without directly passing the cost onto users.

US6456234 describes a system and method for proactive content delivery.

### SUMMARY

In light of the present need for network investment without direct cost to users, a brief summary of various exemplary embodiments is presented. Some simplifications and omissions may be made in the following summary, which is intended to highlight and introduce some aspects of the various exemplary embodiments, but not to limit the scope of the invention. Detailed descriptions of a preferred exemplary embodiment adequate to allow those of ordinary skill in the art to make and use the inventive concepts will follow in later sections.

Various exemplary embodiments relate to a method of controlling access to sponsored content at a network node as provided in claim 1. In some embodiments, the step of determining a sponsored content list based upon the context further includes ranking one or more content items in the content list based upon the context and the one or more preference items. In some embodiments, the step of determining a sponsored content list based upon the context further includes selecting a subset of one or more content items in the content list based upon the context and the one or more preference items.

In some embodiments, the context includes one of time of day, number of active users, number of sponsored users, location, preferred preference items, and amount of network congestion. In some embodiments, the method further includes receiving an updated context of the network node; determining the context is invalid for the user terminal based on one or more usage rules; and sending the user terminal a message based upon the determination the context is invalid.

In some embodiments, the method further includes sending a message to a billing module.

Various exemplary embodiments relate to a network node as provided in clam 7.

It should be apparent that, in this manner, various exemplary embodiments enable content sponsoring decisions based on the context of a locality and user preferences. In particular, by evaluating content sponsoring decisions.

### BRIEF DESCRIPTION OF THE DRAWINGS

In order to better understand various exemplary embodiments, reference is made to the accompanying drawings, wherein:
FIG. 1 illustrates an exemplary location where a small cell allows a user to connect to a content provider over an operator's network;
FIG. 2 illustrates a method for deciding whether to allow a user to connect to a content provider over the operator's network;
FIG. 3 illustrates an exemplary hardware diagram for a device such as device including a small cell.

### DETAILED DESCRIPTION

The description and drawings presented herein illustrate various principles. It will be appreciated that those skilled in the art will be able to devise various arrangements that, although not explicitly described or shown herein, embody these principles and are included within the scope of this disclosure. As used herein, the term, "or," as used herein, refers to a non-exclusive or (*i.e.,* and/or), unless otherwise indicated (*e*.*g*., "or else" or "or in the alternative"). Additionally, the various embodiments described herein are not necessarily mutually exclusive and may be combined to produce additional embodiments that incorporate the principles described herein. Further, while various exemplary embodiments are described with regard to content sponsoring decisions in small cells connected to a wireless operator's network, it will be understood that the techniques and arrangements described herein may be implemented to facilitate content sponsoring decisions in other types of systems that implement multiple types of data processing or data structure, or locally-based network nodes.

In order to prevent over-usage of the network by any individual user, the majority of end-user data plans come with a usage cap enforced by the operator. Users who exceed the cap either cannot use data services until the cap is reset, or must pay an additional fee for any data used. These caps are meant to encourage users to restrict the data usage on their mobile devices, thus preventing the network operators' networks from becoming too congested. However, less availability of bandwidth to users may result in less usage for OTT services and less revenue for the OTTs, particularly because the products and services offered by the OTTs often require the greatest bandwidth relative to all data applications.

Some network operators allow OTTs and others to "sponsor" content for end-users. When a sponsorship exists, and when an end-user consumes sponsored content, the operator either does not charge to the user's data quota for transmitting the sponsored content over the operator's network, or charges the sponsored usage at a subsidized rate. (Note that to some degree "user" and "user device" may be used interchangeably herein, because the use of the user's device may be ascribed to the user). In one example, for consumption of 1GB of sponsored content, the operator may deduct only 500MB from the user's quota. In return for the operator transmitting the sponsored content over the operator's network, the sponsors may pay a sponsorship fee to the operator. Thus, users gain additional usage quota to consume content, sponsors garner more user subscriptions and revenue, and operators achieve an additional source of revenue to support their investment in the network.

However, there are problems with sponsoring arrangements. As one example, existing approaches for content sponsoring are not real-time and context specific. Content sponsoring decisions are made before a user connects, in some instances at the time the contract between the sponsor and the network operator is signed, without taking into account user intentions and user context. For example, a sponsor may offer a type of sponsored content to all users that only a subset of users are likely to accept. In another example, an operator may randomly offer users any content in a database of all of the sponsored content that is available, again without regard to an individual user's preferences. In another example, a malicious or careless user may misuse the content sponsoring by streaming a great deal of sponsored content over the operator's network, without actually watching the content. Such overuse may result in network congestion without achieving the sponsor's objective engaging users interested in the sponsored content.

Thus, a system is described herein to provide content sponsoring decisions in real-time based on each user's current context, such as the user's interests, location, network capacity of the network node, and other considerations. Small cells (for example, LTE or Wi-Fi) may be configured to evaluate a user's context and the context of the cell and determine whether to offer sponsored content to a user, and which content to offer.

Small cells are deployed by a network operator (e.g., Verizon or AT&T), to serve a limited area. Ordinarily as a user who subscribes to an operator's service consumes data over a network link that utilizes the small cell, the data usage will be deducted from the usage quota associated with the user's subscription. As with sponsored network usage in general, in the case of sponsored content, the network operator will not charge data usage through the small cell against the user's quota, or will charge the usage at a reduced rate, e.g. only a percentage of the data actually used will be charged against the user's account. However, the decision of whether sponsored content should be offered to the user in the first place may be more focused because the small cell may have context that may not be ascribed to a wider area.

Referring now to the drawings, in which like numerals refer to like components or steps, there are disclosed broad aspects of various exemplary embodiments.

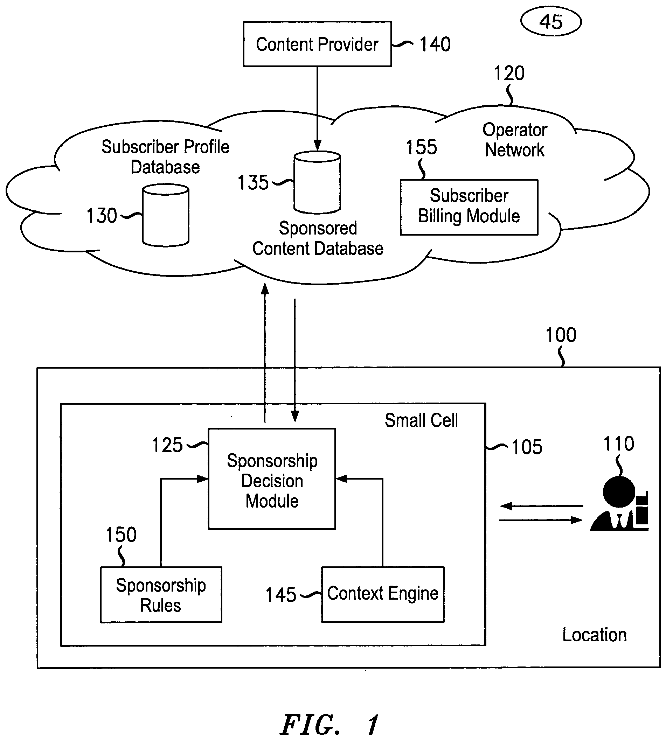

Fig. 1 demonstrates an illustrative location 100 where a small cell 105 allows a user 110 to connect to a content provider 140 over the operator's network 120. The small cell 105 may be deployed at a location 100. The small cell may include a Sponsorship Decision Module 125 which may evaluate a context and determine whether to enable content sponsoring, the duration of sponsoring for each user and/or for different content, and the content to be sponsored.

When a user 110 enters into range 100 of the small cell 105, the Sponsorship Decision Module (SDM) 125 may determine whether to offer sponsored content to the user 110 based upon the context of the location 100 served by the small cell 105. For example, the SDM 125 may query a local context engine 145 on the small cell 105 to provide real-time contextual information about the location 100 and surroundings. The context engine 145 may provide real-time information such as the number of active users on the cell, number of sponsored users on the cell, network traffic levels, congestion caused by sponsored content, etc. The SDM 125 may retrieve sponsorship rules from a store 150, and determine based upon the contextual information 145 and the sponsorship rules 150 whether to offer content sponsoring to the user 110.

If the Sponsorship Decision Module (SDM) 125 determines that the user 110 may be offered sponsored content, the SDM may send a unique identifier associated with the user 110, to the network backend 120 of the operator. Note that although the network backend 120 is described herein as provided by the network operator, in some embodiments a third party provider may provide one or more elements of the backend 120, for example, by the network provider passing user requests through to the third party provider, by re-routing, or by the third-party provider provisioning and maintaining a server housed by the network provider. The network backend 120 may include a Subscriber Profile Database 130 which may calculate and store information about each network user's interests, likes, and dislikes based on information stored about the user 110. For example, the Subscriber Profile Database 130 may be maintained by the network provider based on user history, for example, while browsing over the provider's network, based on the user's past sponsorship decisions, and/or based on demographic information about the user such as age, gender, billing address, billing plan, profiles of related users (e.g. users on the same billing account or living at the same billing address), etc. Also, the network provider may partner with one or more profile providers and include in the Subscriber Profile Database 130 information provided by the profile providers. The user 110 may be invited to provide their login names and passwords for the profile providers, e.g. Facebook, Google, Pinterest, or other service that tracks the user's interests. The profile providers may share a portion of or all of a user's profile information with the network provider, or may provide a separate database or access to a dataset where ownership of the user profile information provided by the profile provider remains with the profile provider, or some other pairing between a network operator and a profile provider to share profile data. Other methods of building a subscriber profile may be known to one of skill in the art.

On receiving a unique identifier from a SDM 125, the Subscriber Profile Database 130 may return a configurable number k of the top interests (e.g. Football, Guitar, Computers) from the profile associated with the subscriber whose record matches the unique identifier. The operator may maintain a database 135 of all sponsored content. The Sponsored Content Database 135 may be populated by providing an interface (e.g. a web interface) to sponsors or providers of content 140 which may be sponsored where they enter meta data (e.g. URL or other network address, textual description, content type, number of users to allow to access the content, etc.) identifying and describing the content that may be provided and/or sponsored on the operator's network.

On obtaining the user's top k interests from the Subscriber Profile Database 130, the SDM 125 may send a query to the Sponsored Content Database 135 which may return a list of content which matches the user's profile. The SDM may then send a message such as an SMS message to the user device 110 to offer the list sponsored content to the user. For example, the small cell 105 may send a message to the user 110 that content sponsoring has been enabled on his/her device. The message sent to the user may include an app link so that when the user opens the app, all of the traffic for the sponsored content will go through that content provider's 140 servers, such that the network provider will know which app and/or servers are accessing the network, and thus know that a discount/subsidized rate should be applied as described below. In an alternative embodiment, the network operator may monitor traffic source of a user's usage, and infer whether it is related to the sponsored content. For example, if a user 110 has agreed in response to a message offering sponsored content to be sponsored for a particular type of content, e.g. a particular category of content, and the user 110 opens that type of sponsored content, the operator may read the meta-data of the sponsored content, verify through the Sponsored Content Database 135 that the content belongs to the category, and transmit the usage information to the billing module 150 with an indication that the usage should be discounted, as described herein.

The SDM 125 may also send a message to a subscriber billing module 155 on the operator network 120 indicating that user 110 will be sponsored to access particular content transmitted over small cell 105. In response to the message that the user has been sponsored, the subscriber billing module 155 may adjust the billing rates for the sponsored user 110.

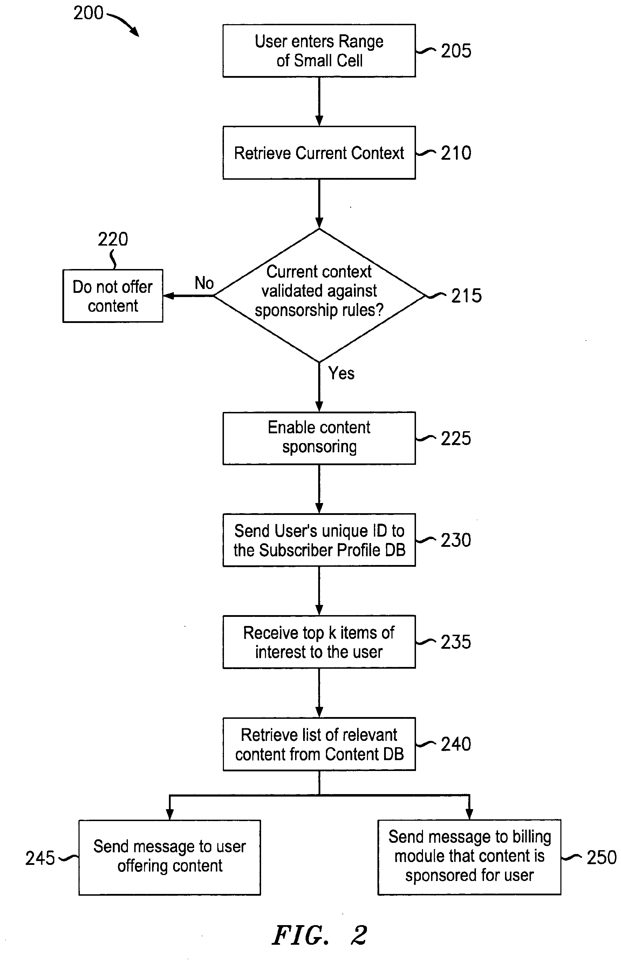

Fig. 2 demonstrates a method 200 where a small cell 105 decides whether to allow a user 110 to connect to a content provider 140 over the operator's network 120. In method 200, a small cell 105 may use indicators such as, for example, user profile, network speed at the small cell 105, current usage at the small cell node 105, for making sponsorship and content decisions. Thus, the small cell may make local content sponsoring decisions based on the profile of each user as well as the context of the surroundings, so that content sponsoring may be more relevant to the users, avoiding negative effects of sponsored data such as network congestion.

Method 200 may begin 205 when a user 110 enters the range of a small cell 105 in a location 100. The small cell 105 may detect the user 110 when user device 110 attempts to connect to small cell 105. Sponsorship Decision Module 125 may retrieve the current context 210 from a context engine 145 and may determine 215 if the context is valid when compared to rules stored in rules storage 150. Context is the element that determines the sponsoring decision.

For example, SDM 125 may determine whether user 110 is a subscriber of the network operator that operates small cell 105, or that provides network service through small cell 105. In another embodiment, small cell 105 may not call SDM 125 unless user 110 is a subscriber of the network operator.

Other context that may influence or determine whether 215 SDM 125 offers to sponsor content for user 110 include factors to ensure that there is not so much sponsoring that the network becomes congested. For example, when the SDM 125 queries the Context Engine 145 to find the current context of the surrounding, it may find that there are a number of users already using small cell 105, which is resulting in a degree or percentage of network utilization. Further, there may be a number of active users who are already sponsored by small cell 105. The Sponsoring Rules 150 for small cell 105 may allow additional sponsoring only if the number of active sponsored users is less than a maximum number, and/or if network utilization a certain percentage. Further, sponsoring rules 150 may limit the amount of sponsored content an individual user may consume in a given time period (e.g. daily, or at certain times of day), based upon, for example, a time limit or bandwidth limit. If the current context satisfies the sponsoring rules, SDM 125 may enable content sponsoring 225 for the new user 110.

Small cell 105 may send 230 the unique ID associated with user 110 to the Subscriber Profile Database 130 situated in the operator backend 120. Note that in some embodiments, small cell 105 may maintain a cached store of the Subscriber Profiles of the users who have most recently or most often used small cell 105, and may first determine whether the user's profile is in the cache. In these embodiments, the profiles in the cache may be periodically updated from the Subscriber Profile Database 130 when the user 110 is not currently registered with the small cell 105. The Subscriber Profile Database 130 may return 235 to the SDM 125 the user's top k interests, for example, {Football, Cars, San Francisco}. SDM 125 may then query 240 the Sponsored Content Database 135 to find content that matches these interests. When SDM 125 receives the content list 240 from the content database 135, it may further rank the content based on criteria such as the breadth of content available (for example, the number of items in each category or bandwidth of the content in each category), the degree of sponsorship (for example, content with less impact on the user's quota per MB consumed may receive priority), and the time it will take to consume the content (for example, content that will take less time to consume than the node's 105 time limit may receive priority). For example if SDM 125 finds that an OTT provider 140 is subsidizing the consumption of football videos on the operator's network by 80%, and videos of auto racing by 60%, it may pick the football content to offer to the user 110. In some embodiments, the SDM 125 may offer all relevant content sent by the sponsored content database 135 to the user 110. If there is no content relevant to the user 110, the SDM may determine that content should not be offered to user 110, or may offer content indicated as general interest or other category. In the former example, both content and context decisions must be satisfied for content to be offered to user 110 - the Sponsored Content database 135 must have the right content for this user 110 and the right context 145 in the environment 100. SDM 125 may send a user's content decisions to subscriber profile database 130 to help build the user's profile.

Once SDM 125 has determined 215 that the context allows the user 110 to be offered sponsored content and has retrieved a list 240 of relevant content from the sponsored content database 135, small cell 105 may send user device 110 a message 245 indicating that sponsored content is available.

At the same time, the SDM 125 or other module on small cell 105 may send a message 250 to the billing module 155 indicating that the content may be viewed through the small cell 105 at a reduced rate. For example, the small cell 105 may send a message like {user id: 087878701, sponsored content: sports, music, discount: 50%} or {user: 087878702, sponsored content: Facebook, discount: 100%}. The subscriber billing module 155 may use these messages to adjust the billing rates for the sponsored user 110.

In some instances, if the SDM 125 may evaluate 215 the current context 145 against the sponsorship rules 150 and determine 220 that content should not be offered to a new user 110. For example, if a pre-specified sponsoring rule allows only a maximum number of sponsored users at a particular time of day, SDM 125 may first query the context engine 145 to find how many sponsored users are active on the small cell 105 at this time, and if the number of users is less than the maximum number, it will enable sponsoring for the next user walking into the range of the small cell, but, on the contrary, if there are already the maximum number of active sponsored users, the cell 105 may refuse to sponsor any further users 220.

As described above, the location 100 in which the small cell 105 is placed may influence the rules recorded in the cell 150, and may also influence what context is reported by the context engine 145. For example, the owner or manager of location 100 may also wish to defray sponsorship costs, in addition to or instead of a content provider 140, and thus may want to control the sponsorship rules. Likewise, the owner or manager of location 100 may want users of a certain profile to be at location 100, for example, users who stay less than a certain amount of time or consume less than a certain amount of sponsored content, and also may wish to control the sponsorship rules. The decision about what type of content is offered may also be influenced by location 100. For example, location 100 may be a sporting venue, and the context rules of location 105 may indicate that only sponsored content relevant to the venue 100 may be offered. In this instance, SDM 125 may skip steps 230 and 235, and retrieve only information relevant to the location 100 from the sponsored content database 135.

As a further example, network operators and/or location owners may wish to protect the quality of service provided at the small cell 105 by consumers of unsponsored content, or for all data consumers, by placing limitations on additional sponsoring based on the amount of congestion in the network attributed to (caused by) ongoing sponsoring of content or by network usage overall. Thus, context rules may be specified either by the operator (e.g. Verizon, AT&T), or by the location owner, who may or may not be a sponsor or co-sponsor of the content. More than one rule or set of rules 150 (e.g. maximum number of users, maximum congestion level) may be determinative when calculating whether a user should be offered content sponsoring.

Generally the content sponsor 140, e.g. ESPN, will not influence local decisions at the cell level 105, but will have an influence on what type of content is sponsored and/or what user demographic (gender, age, frequency of visits to a venue, etc.) is offered content. Specifically, the content provider/sponsor may indicate in the sponsored content database 135 what type of content they are providing (sports, shopping, etc.), and may also provide a target demographic. The network provider (Verizon, AT&T) 120 may then reach the right users, and decide in what context the content may be sponsored. For example, if, based on the user's profile in the Subscriber Profile Database 130 (or cache), the user 110 has no interest in sports, then sports content won't be offered to the user 110 as sponsored content when the user 110 comes in contact with the small cell 105. But, if a user 110 with a profile indicating interest in sports walks in, he or she will be a candidate for sponsorship for sports content.

Thus, decisions about content sponsoring may be extended to the physical world. Because small cells are used for local sponsorship decisions, in particular, real-time content sponsoring at the level of small cells, by taking into account the profile of the target users as well as the context of the surroundings, a location owner may attract customers by offering sponsored content as a benefit. For example, to attract customers, a location owner can decide to sponsor video usage on a percentage bases for all the customers connected to its small cell 105. In return for this sponsoring enablement, the location owner may pay a sponsorship fee to the network operator. However, location owners may be willing to provide this benefit to attract not only customers, but the customers who meet a context profile, and in fact may prefer to allow network operators who allow contextual control to place small cells in their locations so that the location owner may control the sponsored data usage context of users in their locations. Hence, in addition to the Content providers 140, network operators may access another revenue stream from content sponsored by entities interested in the properties of physical locations like location 100.

Besides determining actions to take when a user 110 enters a location 100 and thus enters into the range of small cell 105, SDM 125 may also enforce other context rules. For example, if the rules 150 indicate that there is a time or data limit for a user 110, and the user reaches their time or data limit, the SDM 125 may take a number of actions. First, in none, one, or more instances as the user 110 approaches their time or data limit, the user device 110 may be sent a warning by a textual message or other signal that continued usage of the content over the sponsorship limit will be un-sponsored, i.e. not at a discount. Also, when a user is first offered content 245, the offer message may include an indication of the maximum sponsored usage, for example, SDM 125 may include a time limit or other type of limitation in the initial offer message. This message may be included in the application providing the sponsored content when the sponsored content begins. Likewise, if the user 110 reaches their time or data limit, the user 110 may be warned by a textual message or other signal that continued usage of the content over the sponsorship limit will be un-sponsored. In one embodiment, the user 110 may continue uninterrupted to receive the content at an undiscounted rate. In another embodiment, the user 110 may have to affirmatively indicate through a user interface that the content should continue at an undiscounted rate. In other embodiments, the content may become unavailable if it is not sponsored, and the SDM 125 may disengage streaming from the content source 140 to the user device 110 through the small cell 105. Once the user 110 has reached their time or data limit for sponsored content, the SDM 125 may send a message to the billing system 155 that data usage by the user, even of previously sponsored content, will going forward be at an un-discounted rate (relative to the user's rate when not viewing sponsored content - the user 110 may have a billing arrangement where other discounts may still apply).

Other actions may result in the user 110 no longer receiving content through the small cell 105 at a discounted rate. The user 110 may leave the range of the small cell 105. As where the user 110 exceeds their limit, upon leaving the location 100 the user 110 may receive a message that continued usage of the content over the sponsorship limit will be un-sponsored, or the content may be discontinued. In some embodiments, if the small cell 105 reaches a certain level of network congestion, SDM 125 may be prompted to re-evaluate all active sponsored users to determine if the context is still met. Active users may be tested in an order, for example, whether they were sponsored first, last, or have a priority status, for example, have a preferred billing plan with the network operator or a status with an owner or manager of location 100. In addition, the user 110 may stop consuming content by logging out, turning off their device, exiting the viewing application, or otherwise stopping consuming sponsored content while remaining in the location 100. Billing system 155 rules may require that only certain small cells allow sponsored content, and thus no instruction need be sent, and/or an instruction may be sent to the billing system 155 that further data usage by the user 110 of the content will be at an un-discounted rate.

In addition, when a user 110 discontinues receiving sponsorship for received content for any reason, the SDM 125 may decrement the number of users registered as receiving sponsored content over the small cell 105. When the user 110 disconnects (or is disconnected), or is transferred to unsponsored status, and the number of users sponsored at the small cell 105 is decremented, the SDM 125 may re-check the context engine 145 for one or more users in range of the small cell 105. If the subtraction of the user changes the context for one or more users such that they previously did not meet the criteria 150 to receive sponsored content, but now the context 145 allows sponsored content, the one or more users may be offered sponsored content as discussed above. Examples of criteria that may be met by the cessation of a user's sponsoring session include but are not limited to whether a maximum number of users permitted to receive sponsored content were registered to receive sponsored content, or whether the usage of sponsored content met or exceeded a threshold amount, e.g. causing network congestion.

The manner in which a user's context may be rechecked may vary. For instance, all unsponsored users in the range of the small cell may be checked, with priority given to users of a certain profile, for example, users who have a loyalty account with the small cell 105 location owner, or with priority given to the first arriving or last arriving user at the small cell's range 100, or to users who have used a large amount or very little sponsored content or unsponsored content at location 100.

Context may prevent malicious or careless usage in a number of ways. The decision whether to provide sponsored content above/below a cap set by a content provider 140 or location owner or other sponsor may be in the sponsored content database 135. Besides the basic fact of whether the content is available at all for sponsorship, which may be controlled in order to prevent usage through multiple small cells over a cap, there may be additional information in the sponsored content database 135 such as how much of a cap is left (if the cap is running low, only priority users and/or new users may be offered sponsorship for the content), how much of a discount will be applied (where the discount level may be adjusted if a cap is running low), or how many users may be sponsored in the aggregate. Thus, because SDM 125 at small cell 105 and other small cells and the sponsored content database 135 are in constant communication about requested content, sponsored content database 135 or a module attached to it may be triggered to pull access to all users for specific content if that content is used abusively or over a specific cap.

Additionally, malicious or careless use may be stopped based on the context rules. The content provider or sponsor may wish to sponsor content for users who actually watch the content, and, for example, advertisements associated with sponsored content. A malicious or careless user may access the content but not watch, wasting the sponsor's money. Additionally, the burden on the network for users streaming unwatched content, without any benefit to the user or the sponsor, may quickly become unsustainable for the network provider. Such abuses may be minimized because by using a context the operator may specify rules indicating limits on the amount of data or amount of time a user may be sponsored for a single task, at a certain time of day, only when in the reach of specific small cells, or below a certain amount of network connection, only a certain percentage of the time (or at a lower position in the queue if others are waiting and user has been sponsored above a certain amount) - because all of the context 145 about a location 100 may influence the sponsorship decision 215, a malicious user cannot just sit at a location and download an unlimited amount of data. In some embodiments, the SDM modules may retrieve information for the aggregate sponsored use by a user 110 from billing module 155 and/or from Subscriber Profile Database 130, to determine if the user's use is abusive. For example, not only can a network operator indicate that a user 110 may only download a capped amount of data, but the context 145 at each small cell 105 provides the ability to add other factors such as repeated usage by specific users at the same cell, specific users repeatedly causing network congestion, etc. as described above.

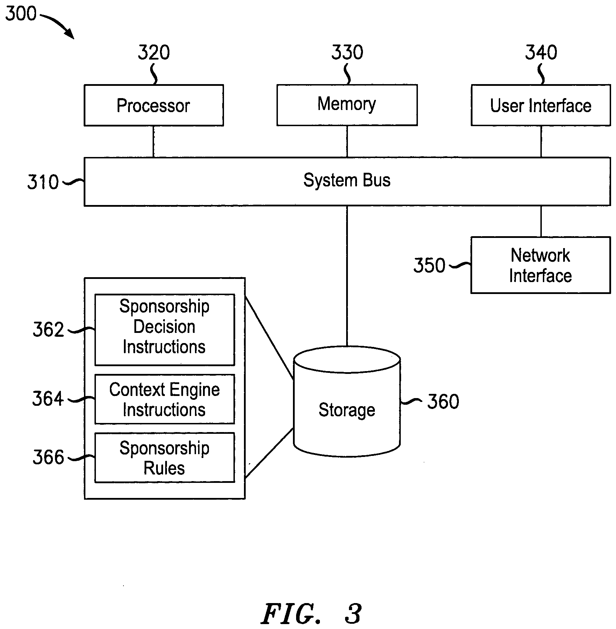

FIG. 3 illustrates an exemplary hardware diagram for a device 300 such as device including a small cell. The exemplary device 300 may correspond to the small cell 105 of FIG. 1. As shown, the device 300 includes a processor 320, memory 330, user interface 340, network interface 350, and storage 360 interconnected via one or more system buses 310. It will be understood that FIG. 3 constitutes, in some respects, an abstraction and that the actual organization of the components of the device 300 may be more complex than illustrated.

The processor 320 may be any hardware device capable of executing instructions stored in memory 330 or storage 360. As such, the processor may include a microprocessor, field programmable gate array (FPGA), application-specific integrated circuit (ASIC), or other similar devices.

The memory 330 may include various memories such as, for example L1, L2, or L3 cache or system memory. As such, the memory 330 may include static random access memory (SRAM), dynamic RAM (DRAM), flash memory, read only memory (ROM), or other similar memory devices.

The user interface 340 may include one or more devices for enabling communication with a user such as an administrator. For example, the user interface 340 may include a display, a mouse, and a keyboard for receiving user commands.

The network interface 350 may include one or more devices for enabling communication with other hardware devices. For example, the network interface 350 may include a network interface card (NIC) configured to communicate according to the Ethernet protocol. Additionally, the network interface 350 may implement a TCP/IP stack for communication according to the TCP/IP protocols. Various alternative or additional hardware or configurations for the network interface 350 will be apparent.

The storage 360 may include one or more machine-readable storage media such as read-only memory (ROM), random-access memory (RAM), magnetic disk storage media, optical storage media, flash-memory devices, or similar storage media. In various embodiments, the storage 360 may store instructions for execution by the processor 320 or data upon with the processor 320 may operate. For example, the storage 360 may store Sponsorship Decision Instructions 362 for validating context against sponsorship rules according to the concepts described herein. The storage may also store Context Engine Instructions 364 and Sponsorship Rules 366 for use by the processor executing the Sponsorship Decision Instructions 362.

According to the foregoing, various exemplary embodiments provide for context-specific and user-directed decisions for sponsoring context at small cells through which users access content over a network. In particular, by limiting content sponsoring to content of interest to the user and subject to the restrictions set by the content sponsor and/or limitations set by the owner or manager of the location where the small cell is located.

It should be apparent from the foregoing description that various exemplary embodiments of the invention may be implemented in hardware and/or firmware. Furthermore, various exemplary embodiments may be implemented as instructions stored on a machine-readable storage medium, which may be read and executed by at least one processor to perform the operations described in detail herein. A machine-readable storage medium may include any mechanism for storing information in a form readable by a machine, such as a personal or laptop computer, a server, or other computing device. Thus, a machine-readable storage medium may include read-only memory (ROM), random-access memory (RAM), magnetic disk storage media, optical storage media, flash-memory devices, and similar storage media.

It should be appreciated by those skilled in the art that any block diagrams herein represent conceptual views of illustrative circuitry embodying the principals of the invention. Similarly, it will be appreciated that any flow charts, flow diagrams, state transition diagrams, pseudo code, and the like represent various processes which may be substantially represented in machine readable media and so executed by a computer or processor, whether or not such computer or processor is explicitly shown.

It should be appreciated by those skilled in the art that any block diagrams herein represent conceptual views of illustrative circuitry embodying the principals of the invention. Similarly, it will be appreciated that any flow charts, flow diagrams, state transition diagrams, pseudo code, and the like represent various processes which may be substantially represented in machine readable media and so executed by a computer or processor, whether or not such computer or processor is explicitly shown.

## Claims

1. A method of controlling access to sponsored content at a network node (105), wherein sponsored content is content for which the transmission is not charged to a user's data quota by an operator (120), the method comprising:
determining that a user terminal (110) has entered a coverage area of the network node;
receiving a context (145) of the network node, wherein the context comprises an amount of network congestion caused by sponsored content;
determining (125), based upon the context and sponsorship rules (150), whether or not to offer the sponsored content to the user terminal, wherein sponsorship rules are rules that determine whether to offer sponsored content to a user;
in the event that it is determined to offer sponsored content to the user terminal, receiving a unique identifier of the user terminal;
sending the unique identifier to a profile database (130);
receiving from the profile database one or more preference items, the one or more preference items relating to a configurable number of interests associated with the unique identifier;
sending to a content database (135) the one or more preference items;
receiving from the content database a preference content list, based on the one or more preference items;
determining a sponsored content list based upon the context; and
sending the user terminal a message based upon the context and comprising the sponsored content list.

2. The method according to claim 1, further comprising determining one or more preference items based upon the context.

3. The method according to claim 1, wherein the step of determining a sponsored content list based upon the context further comprises:
ranking one or more content items in the content list based upon the context and the one or more preference items.

4. The method according to claim 1, wherein the step of determining a sponsored content list based upon the context further comprises:
selecting a subset of one or more content items in the preference content list based upon the context and the one or more preference items.

5. A method according to claim 1, further comprising:
receiving an updated context of the network node;
determining the context is invalid for the user terminal based on one or more usage rules; and
sending the user terminal a message based upon the determination the context is invalid.

6. A method according to claim 1, further comprising:
sending a message to a billing module (155).

7. A network node (105) comprising:
a sponsorship decision module (125) being operable to retrieve a current context for the network node from a context engine (145), wherein the context comprises an amount of network congestion caused by sponsored content, wherein sponsored content is content for which transmission is not charged to a user's data quota by an operator (120), and determine, based upon the context and sponsorship rules, whether or not to offer the sponsored content to a user terminal (110) that has entered a coverage area of the network node, wherein sponsorship rules are stored in a rules storage device (150) of the network node and are rules that determine whether to offer sponsored content to a user, the network node being operable, in the event that it is determined to offer sponsored content to the user terminal, to:
receive a unique identifier of the user terminal;
send the unique identifier to a profile database;
receive, from the profile database, data representing one or more preference items, the one or more preference items relating to a configurable number of interests associated with the unique identifier;
send to a content database the one or more preference items;
receive from the content database a list of relevant sponsored content items based on the one or more preference items;
determine a sponsored content list based upon the context; and
send a message to the user terminal based on the context and comprising the sponsored content list.

## Patentansprüche

1. Verfahren zur Zugriffskontrolle auf gesponserten Content an einem Netzwerkknoten (105), wobei gesponserter Content ein Content ist, für welchen die Übertragung nicht angerechnet wird auf die Datenquote eines Benutzers durch einen Betreiber (120), wobei das Verfahren umfasst:
Bestimmen, ob sich das Benutzerendgerät (110) in einen Abdeckungsbereich des Netzwerkknotens begeben hat;
Empfangen eines Kontextes (145) des Netzwerkknotens, wobei der Kontext umfasst einen Betrag der Netzwerkcongestion, verursacht durch gesponserten Content;
Bestimmen (125), auf Grundlage der Kontext- und der Sponsoring-Regeln (150), ob der gesponserte Content dem Benutzerendgerät angeboten werden soll oder nicht, wobei die Sponsoring-Regeln Regeln sind, die bestimmen, ob der gesponserte Content einem Benutzer angeboten werden soll;
Für den Fall, dass bestimmt wird, gesponserten Content dem Benutzerendgerät anzubieten, Empfangen einer eindeutigen Kennung des Benutzerendgeräts;
Senden einer eindeutigen Kennung an eine Profildatenbank (130);
Empfangen von der Profildatenbank eines oder mehrerer Präferenzelemente, wobei das eine oder die mehreren Präferenzelemente sich auf eine konfigurierbare Anzahl von Interessen beziehen, die mit der eindeutigen Kennung verbunden sind;
Senden an eine Content-Datenbank (135) des einen oder der mehreren Präferenzelemente;
Empfangen von der Content-Datenbank einer Liste von Präferenzcontents, auf Grundlage des einen oder der mehreren Präferenzelemente;
Bestimmen einer Liste gesponserter Contents auf Grundlage des Kontextes;
und
Senden an das Benutzerendgerät einer Nachricht auf Grundlage des Kontextes und umfassend der Liste gesponserter Contents.

2. Verfahren nach Anspruch 1, weiterhin umfassend das Bestimmen eines oder mehrerer Präferenzelemente auf Grundlage des Kontext.

3. Verfahren nach Anspruch 1, wobei der Schritt des Bestimmens einer Liste gesponserter Contents auf Grundlage des Kontextes weiterhin umfasst:
den Rang eines oder mehrerer Contentelemente in der Liste der Contents auf Grundlage des Kontextes und des einen oder der mehreren Präferenzelemente.

4. Verfahren nach Anspruch 1, wobei der Schritt des Bestimmens einer Liste gesponserter Contents auf Grundlage des Kontextes weiterhin umfasst:
Auswählen eines Untersatzes eines oder mehrerer Contentelemente in der Liste der Präferenzcontents auf Grundlage des Kontextes und des einen oder der mehreren Präferenzelemente.

5. Verfahren nach Anspruch 1, weiterhin umfassend:
Empfangen eines aktualisierten Contents des Netzwerkknotens;
Bestimmen, ob der Kontext ungültig ist für das Benutzerendgerät auf Grundlage von einer oder mehreren Anwendungsregeln; und
Senden an das Benutzerendgerät einer Nachricht auf Grundlage des Bestimmens, ob der Kontext ungültig ist.

6. Verfahren nach Anspruch 1, weiterhin umfassend:
Senden einer Nachricht an ein Vergebührungsmodul (155).

7. Netzwerkknoten (105), umfassend:
ein Sponsoring-Entscheidungsmodul (125), das betreibbar ist zum Abrufen eines aktuellen Kontextes für den Netzwerkknoten von einem Context-Engine (145), wobei der Kontext umfasst einen Betrag der Netzwerkcongestion, verursacht durch den gesponserten Content, wobei gesponserter Content ein Content ist, für welchen die Übertragung nicht angerechnet wird auf die Datenquote eines Benutzers durch einen Betreiber (120),
und Bestimmen, auf Grundlage des Kontextes und der Sponsoring-Regeln, ob einem Benutzerendgerät (110), das sich in einen Abdeckungsbereich des Netzwerkknotens begeben hat, gesponserter Content angeboten werden soll oder nicht, wobei Sponsoring-Regeln in einer Regelspeichervorrichtung (150) des Netzwerkknotens gespeichert werden und Regeln sind, die bestimmen, ob dem Benutzer gesponserter Content angeboten werden soll, wobei der Netzwerkknoten betreibbar ist, im Fall, dass bestimmt wird, dem Benutzerendgerät gesponserten Content anzubieten, zum:
Empfangen einer eindeutigen Kennung des Benutzerendgeräts;
Senden einer eindeutigen Kennung an eine Profildatenbank;
Empfangen, von der Profildatenbank, von Daten, welche eines oder mehrere Präferenzelemente repräsentieren, wobei das eine oder die mehreren Präferenzelemente sich auf eine konfigurierbare Anzahl von Interessen beziehen, die mit der eindeutigen Kennung verbunden sind;
Senden an eine Content-Datenbank des einen oder der mehreren Präferenzelemente;
Empfangen von der Content-Datenbank einer Liste von gesponserten Content-Elementen auf Grundlage des einen oder der mehreren Präferenzelemente;
Bestimmen einer Liste gesponserter Contents auf Grundlage des Kontextes;
und
Senden einer Nachricht an das Benutzerendgerät auf Grundlage des Kontextes und umfassend die Liste gesponserter Contents.

## Revendications

1. Procédé de contrôle d'accès à un contenu sponsorisé au niveau d'un noeud de réseau (105), dans lequel un contenu sponsorisé est un contenu pour lequel la transmission n'est pas imputée à un quota de données d'un utilisateur par un opérateur (120), le procédé comprenant les étapes suivantes :
déterminer qu'un terminal d'utilisateur (110) est entré dans une zone de couverture du noeud de réseau ;
recevoir un contexte (145) du noeud de réseau, où le contexte comprend une quantité d'encombrement de réseau causée par un contenu sponsorisé ;
déterminer (125), sur la base du contexte et de règles de sponsoring (150), si oui ou non offrir le contenu sponsorisé au terminal d'utilisateur, où des règles de sponsoring sont des règles qui déterminent si offrir un contenu sponsorisé à un utilisateur ;
dans le cas où il est déterminé d'offrir un contenu sponsorisé au terminal d'utilisateur, recevoir un identificateur unique du terminal d'utilisateur ;
envoyer l'identificateur unique à une base de données de profil (130) ;
recevoir en provenance de la base de données de profil un ou plusieurs articles de préférence, les un ou plusieurs articles de préférence se rapportant à un nombre configurable d'intérêts associés à l'identificateur unique ;
envoyer à une base de données de contenu (135) les un ou plusieurs articles de préférence ;
recevoir en provenance de la base de données de contenu une liste de contenu de préférence, basée sur les un ou plusieurs articles de préférence ;
déterminer une liste de contenu sponsorisé sur la base du contexte ; et
envoyer au terminal d'utilisateur un message sur la base du contexte et comprenant la liste de contenu sponsorisé.

2. Procédé selon la revendication 1, comprenant en outre la détermination d'un ou plusieurs articles de préférence sur la base du contexte.

3. Procédé selon la revendication 1, dans lequel l'étape de détermination d'une liste de contenu sponsorisé sur la base du contexte comprend en outre l'étape suivante :
classer un ou plusieurs articles de contenu dans la liste de contenu sur la base du contexte et des un ou plusieurs articles de préférence.

4. Procédé selon la revendication 1, dans lequel l'étape de détermination d'une liste de contenu sponsorisé sur la base du contexte comprend en outre l'étape suivante :
sélectionner un sous-ensemble d'un ou plusieurs articles de contenu dans la liste de contenu de préférence sur la base du contexte et des un ou plusieurs articles de préférence.

5. Procédé selon la revendication 1, comprenant en outre les étapes suivantes :
recevoir un contexte mis à jour du noeud de réseau ;
déterminer que le contexte est invalide pour le terminal d'utilisateur sur la base d'une ou plusieurs règles d'utilisation ; et
envoyer au terminal d'utilisateur un message sur la base de la détermination que le contexte est invalide.

6. Procédé selon la revendication 1, comprenant en outre l'étape suivante :
envoyer un message à un module de facturation (155).

7. Noeud de réseau (105) comprenant:
un module de décision de sponsoring (125) qui est exploitable pour récupérer un contexte actuel pour le noeud de réseau à partir d'un moteur de contexte (145), où le contexte comprend une quantité d'encombrement de réseau causée par un contenu sponsorisé, où un contenu sponsorisé est un contenu pour lequel la transmission n'est pas imputée à un quota de données d'un utilisateur par un opérateur (120),
et l'étape consistant à déterminer, sur la base du contexte et de règles de sponsoring, si oui ou non offrir le contenu sponsorisé à un terminal d'utilisateur (110) qui est entré dans une zone de couverture du noeud de réseau, où des règles de sponsoring sont stockées dans un dispositif de stockage de règles (150) du noeud de réseau et sont des règles qui déterminent si offrir un contenu sponsorisé à un utilisateur, le noeud de réseau étant exploitable, dans le cas où il est déterminé d'offrir un contenu sponsorisé au terminal d'utilisateur, pour :
recevoir un identificateur unique du terminal d'utilisateur ;
envoyer l'identificateur unique à une base de données de profil ;
recevoir, en provenance de la base de données de profil, des données représentant un ou plusieurs articles de préférence, les un ou plusieurs articles de préférence se rapportant à un nombre configurable d'intérêts associés à l'identificateur unique ;
envoyer à une base de données de contenu les un ou plusieurs articles de préférence ;
recevoir en provenance de la base de données de contenu une liste d'articles de contenu sponsorisé pertinents basée sur les un ou plusieurs articles de préférence ;
déterminer une liste de contenu sponsorisé sur la base du contexte ; et
envoyer un message au terminal d'utilisateur sur la base du contexte et comprenant la liste de contenu sponsorisé.
